# EUROPÄISCHE PATENTSCHRIFT

(11) **EP 1 023 562 B1**
(45) Veröffentlichungstag und Bekanntmachung des Hinweises auf die Patenterteilung: **31.03.2004**
(21) Anmeldenummer: 98952715.5
(22) Anmeldetag: 16.10.1998
(51) Int. Cl.: F25D 23/06

(54) **WÄRMEISOLIERENDES GEHÄUSE**
HEAT-INSULATING HOUSING
BOITIER CALORIFUGE

(30) Priorität: 16.10.1997 DE 19745826
(43) Veröffentlichungstag der Anmeldung: 02.08.2000
(73) Patentinhaber: BSH Bosch und Siemens Hausgeräte GmbH, 81739 München (DE)
(72) Erfinder: WENNING, Udo, D-89537 Giengen (DE); HIRATH, Jürgen, D-89522 Heidenheim (DE); EBERHARDT, Hans-Frieder, D-89537 Giengen-Burgberg (DE); WOLF, Ulrich, D-89537 Giengen (DE)
(86) Internationale Anmeldenummer: PCT/EP1998/006602
(87) Internationale Veröffentlichungsnummer: WO 1999/020963

(56) Entgegenhaltungen:
- EP-A- 0 071 090
- WO-A-95/19255

## Beschreibung

Die Erfindung betrifft ein wärmeisolierendes Gehäuse gemäß den Merkmalen des Oberbegriffs des Patentanspruchs 1.

Ein derartiges Gehäuse ist zum Beispiel aus der EP-A-0 071 090 bekannt.

Bei Haushaltsgeräten, deren wärmeisolierende Gehäuse auf Vakuumisolationstechnik basieren, ist es Stand der Technik, die vakuumdichten, als Deckschichten dienenden, üblicherweise aus Edelstahlblech gefertigten Begrenzungswände aus mehreren Wandteilen zusammenzufügen und miteinander zu verschweißen. Bei dieser bekannten Herstelltechnik werden die Begrenzungswände in Plattenbauweise erstellt, wobei die einzelnen Wandabschnitte als ebene Blechzuschnitte erstellt und miteinander verschweißt sind.

Weiterhin ist bei auf Vakuumisolationstechnik basierenden wäremeisolierenden Gehäusen für Haushalts-Kältegeräte bekannt, die als innen- und Außenverkleidung dienenden Begrenzungswände des Gehäuses aus vorgeformten, mehrere Wandabschnitte einstückig miteinander verbindenden Profilen zusammenzusetzen. Hierbei kommt für eine der Begrenzungswände jeweils ein U-förmig bzw. ein L-förmig geformtes Profil zum Einsatz, wobei durch das U-Profil der Boden, die Decke und eine Seitenwand und durch das L-Profil die Rückwand und eine weitere Seitenwand bereitgestellt ist. Zur Herstellung der Innen- bzw. Außenverkleidung werden die beiden Profile entweder stumpf oder entlang eigens dafür vorgesehener Fügeflansche miteinander verschweißt werden. Beiden Gehäuse-Aufbautechniken ist gemeinsam, daß werkzeugtechnisch aufwendige und somit kostenintensive Spannwerkzeuge zum Einsatz kommen müssen, um bei in Großserien hergestellten Gehäuseaufbauten ein vakuumdichtes Zusammenfügen und Verbinden der zur Herstellung der Deckwände erforderlichen Einzelelemente garantieren zu können. Trotzdem ist bei beiden Aufbautechniken, insbesondere wenn die Einzelelemente stumpf miteinander verbunden werden, nicht auszuschließen, daß die Vakuumisolierung beeinträchtigende Leckagen auftreten. Um diese Problematik bei der aus einem U- und einem L-Profil bestehenden Aufbaukonzept zu umgehen, ist man dazu übergegangen, die Profile an ihren Verbindungsstellen mit sogenannten Fügeflanschen zu versehen, entlang welcher die Profile dann miteinander verschweißt werden. Dies hat jedoch zur Folge, daß die Fügeflansche in das durch Evakuieren erzeugte Isolationsvolumen ragen und nicht nur das Einbringen von beiden Behälter gegeneinander abstützenden Isolationsmaterials behindern, sondern auch das Wärmeisolationsvermögen der Vakuumisolation durch die Verringerung der möglichen Isolationsbreite in ihrem Bereich beeinträchtigen. Des weiteren ergibt sich durch derartige Herstelltechniken für die als Innen- bzw. Außenbehälter dienenden Begrenzungswände die Problematik, daß der Verschweißvorgang aufgrund der beim Zusammenfügen der Einzelelemente sich ergebenden schroffen Übergänge nicht kontinuierlich über den Eckbereich der zu verbindenden Bauteile hinwegeführt werden kann.

Der Erfindung liegt die Aufgabe zugrunde, bei einem wärmeisolierenden Gehäuse gemäß des Oberbegriffes des Anspruches 1 mit einfachen, konstruktiven Maßnahmen die Nachteile des Standes der Technik zu vermeiden.

Diese Aufgabe wird gemäß der Erfindung durch die Merkmale des Patentanspruchs 1 gelöst.

Durch die Verwendung von Rohrkörpern zum Aufbau der Gehäusemäntel lassen sich nicht nur zum Beispiel durch Verwendung von Halbzeugen auf einfache Weise verschiedene Gehäusequerschnitte erzeugen, sondern auch eine Gehäusekonstruktion bereitstellen, bei welcher lediglich die Rückwand durch Spann- und Fügevorrichtungen zu den Rohrkörpern zu positionieren und mit diesen zu verschweißen ist. Auf diese Weise ist neben dem Werkzeugaufwand vor allem auch die Länge der Schweißnähte zugunsten einer deutlich erhöhten Vakuumdichtheit aufgrund der schweißnahtlosen Wandungsübergänge des Rohrkörpers vermindert. Ferner sind durch eine derartige Gehäuseherstelltechnik verrundete Eckbereiche am Rohrkörper möglich, wodurch der Verschweißvorgang mit der als Rückwand des Gehäusemantels dienenden Abdeckung kontinuierlich fortlaufend erfolgen kann. Ferner ermöglicht die Verwendung von mit in ihren Eckbereichen mit Radien ausgestatteten Rohrkörper den Einsatz eines Verbindungsprofiles, dessen in die Eckbereich einzufügende Profilabschnitte einstückig, z. B. durch Umformen eines ebenen Blechzuschnittes erzeugt sind.

Entsprechend einer bevorzugten Ausführungsform des Gegenstandes der Erfindung ist vorgesehen, daß die Rohrkörper eine quadratische oder rechteckförmige Grundfläche aufweisen, und daß die eine ihrer Öffnungen vakuumdicht verschließende Abdeckung schalenähnlich ausgebildet ist.

Durch die schalenähnliche Gestaltung der als Rückwand dienenden Abdeckung ist ein stumpfes, fertigungstechnisch mit einer gewissen Prozeßunsicherheit behaftetes Fügen mit dem Rohrkörper vermieden, da die Schalenwände beim Zusammenfügen mit den Wänden des Rohrkörpers eine ausreichend genaue Positionierung der Abdeckung zum Rohrkörper ergibt, wodurch der spann- und positioniertechnische Aufwand deutlich vermindert ist.

Nach einer weiteren bevorzugten Ausführungsform des Gegenstandes der Erfindung ist vorgesehen, daß die schalenähnliche Abdeckung mit ihren Schalenwänden die freien Ränder einer der Rohrkörperöffnungen übergreift und am Rohrkörper vakuumdicht festgesetzt ist.

Durch diese Art der Verbindung zwischen der Abdeckung und dem Rohrkörper ist ein sogenannter Überlappstoß erzeugt, welcher, bedingt durch die übereinanderliegend angeordneten Wandstärken der Schalenwände und der Rohrkörperwandungen, ein vakuumdichtes Verbinden der beiden Bauteile mit hoher Prozeßgeschwindigkeit, z. B. für den Fall, daß die Rohrkörper und die Abdeckungen aus Edelstahlblech bzw. Stahlblech mit korrosionsgeschützter Oberfläche erzeugt sind, ermöglicht. Durch das Übergreifen der freien Ränder der Rohrkörperöffnungen durch die Schalenwände ist die Rückwand zum Rohrkörper zwangsläufig zentriert.

Gemäß einer alternativen Ausführungsform des Gegenstandes der Erfindung ist vorgesehen, daß die schalenähnliche Abdeckung in den Öffnungsquerschnitt einer der Rohrkörperöffnungen einfügbar ist und im Öffnungsquerschnitt des Rohrkörpers vakuumdicht festgesetzt ist.

Hierdurch ist auf einfache Weise eine stufenlose Oberfläche an beiden Rohrkörpern erzeugt, wobei die stufenlose Gestaltung des eingesteckten Rohrkörpers das Verfüllen mit Wärmeisolationsmaterial, wie beispielsweise offenzelligen Polyurethanschaum oder Polystyrolschäumen deutlich erleichtert, während die stufenlose Ausführung des außenliegenden Gehäusemantels ohne Nacharbeitung bereits als Sichtfläche für das wärmeisolierende Gehäuse dienen kann. Für den Fall, daß die Schalenränder den freien Rändern des Rohrkörpers zugewandt sind, lassen sich die Abdeckung und der Rohrkörper, wenn diese beispielsweise aus Edelstahlblech oder korrosionsgeschütztem Stahlblech erzeugt sind, auf besonders einfache Weise, z. B. durch Rollennahtschweißen miteinander vakuumdicht verbinden.

Besonders zweckmäßig ausgebildet ist eine schalenähnliche Abdeckung, wenn nach einer nächsten vorteilhaften Ausgestaltung des Gegenstandes der Erfindung vorgesehen ist, daß die schalenähnliche Abdeckung mit einem stufenähnlich ausgebildeten Rücksprung versehen ist, welcher als Maschinenraum dient.

Fertigungstechnisch besonders zweckmäßig und besonders formsteif läßt sich der als Rücksprung dienende Maschinenraum für den Fall herstellen, daß die schalenähnliche Abdeckung durch Tiefziehen einer Edelstahlblechplatine oder einer korrosionsgeschützten Stahlblechplatine erzeugt ist.

Nach einer nächsten bevorzugten Ausführungsform des Gegenstandes der Erfindung ist vorgesehen, daß die Rohrkörper durch Abwinklung einer Edelstahlblechplatine oder einer korrosionsgeschützten Stahlblechplatine erzeugt sind, wobei die freien Enden der Blechplatinen schweißtechnisch vakuumdicht miteinander verbunden sind.

Eine derartige Lösung erlaubt eine von den genormten Rohren abweichende Abmessung der Rohrkörper, insbesondere bezüglich der Formgebung in deren Eckbereichen, wodurch der Verschweißvorgang eines die beiden Rohrkörper beschickungsseitig vakuumdicht miteinander verbindenden Verbindungsprofiles mit den Rohrkörpem mit hoher Prozeßsicherheit und hoher Prozeßgeschwindigkeit kontinuierlich ausführbar ist.

Besonders prozeßsicher und dennoch kostengünstig herstellbar ist ein wärmeisolierendes Gehäuse eines Kältegerätes, wenn gemäß einer nächsten bevorzugten Ausführungsform des Gegenstandes der Erfindung vorgesehen ist, daß das wärmeisolierende Gehäuse nach einem der Ansprüche 1 bis 7 ausgebildet ist.

Außerdem wird ein besonders umweltfreundlich entsorgbares Kältegerätegehäuse mit hohem Wärmeisolationsvermögen erzeugt.

Ebenso besonders prozeßsicher, robust und mit hoher Prozeßgeschwindigkeit herstellbar ist eine wärmeisolierende Herdmuffel eines Haushaltsherdes, wenn gemäß einer letzten bevorzugten Ausführungsform des Gegenstandes der Erfindung vorgesehen ist, daß die wärmeisolierende Herdmuffel nach einem der Ansprüche 1 bis 7 ausgebildet ist. Eine derartige Herdmuffel ist sowohl besonders umweltfreundlich entsorgbar als auch in hohem Maße wärmeisolierend.

Die Erfindung ist in der nachfolgenden Beschreibung anhand von zwei in der beigefügten Zeichnung vereinfacht dargestellten Kältegerätegehäusen erläutert.

Es zeigen:
- Fig. 1: eine erste Ausführungsform eines einen Aggregatesockel aufweisenden Kältegerätegehäuses mit zwei ineinander angeordneten, jeweils an einer ihrer Öffnungen durch eine als Rückwand dienende Abdeckung verschlossene Rohrkörper, in raumbildlicher Ansicht von der Seite und
- Fig. 2: eine zweite Ausführungsvariante eines Kältegerätegehäuses, dessen ineinander angeordnete Rohrkörper an ihrer Rückseite mit einer einen Maschinenraum freisparenden Abdeckung verschlossen sind, in raumbildlicher Darstellung von der Seite.

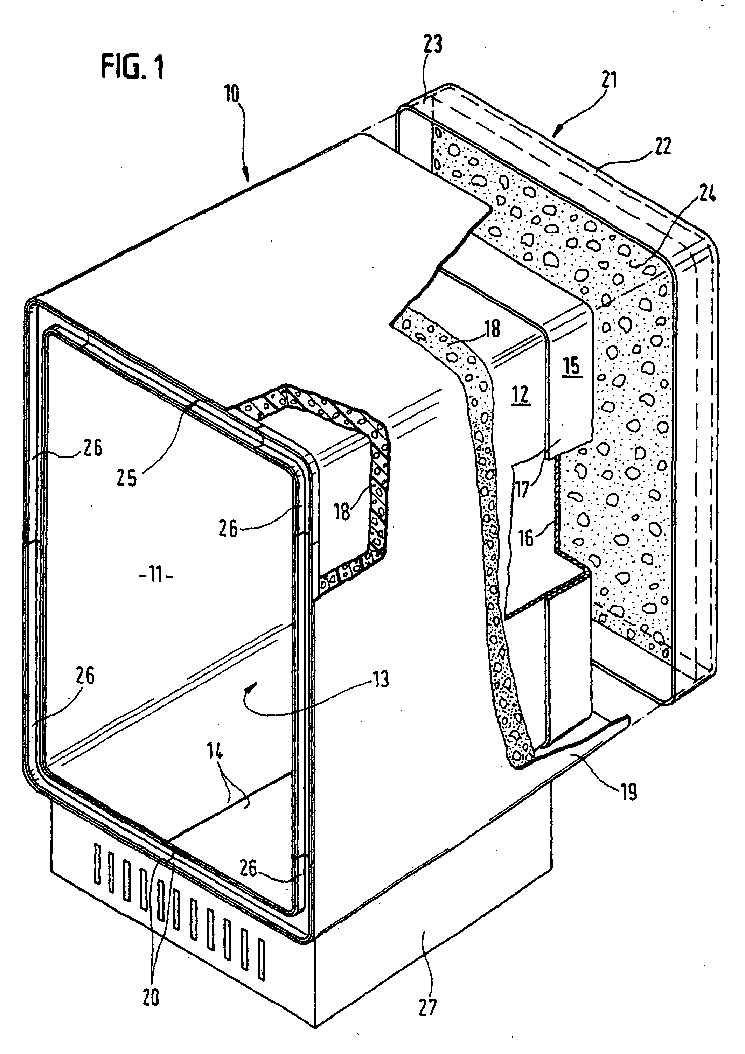

In Fig. 1 ist eine erste Ausführungsform eines für ein Haushalts-Kältegerät, wie einen Haushalts-Kühl- oder -Gefrierschrank verwendbares wärmeisolierendes Gehäuse 10 gezeigt, dessen als Kühl- oder Gefrierraum dienender Nutzraum 11 von einem als Rohrkörper 12 ausgebildeten inneren Gehäusemantel ausgekleidet ist. Dieser umgrenzt den Öffnungsquerschnitt einer zur Beschickung des Nutzraumes 11 dienenden Zugangsöffnung 13 und ist durch mehrmalige Abwinklung beispielsweise einer Edelstahlblechplatine oder einer korrosionsgeschützten Stahlblechplatine erzeugt ist, deren durch die Abwinklung einander zugewandten Enden 14 durch Mikroplasmaschweißen oder Elektronenstrahlschweißen oder dergleichen vakuumdicht miteinander verbunden sind. Der innere, mit rechteckförmigem Querschnitt ausgestattete Rohrkörper 12 ist an seiner der Beschickungsöffnung 13 gegenüberliegenden Stirnseite mit einer aus korrosionsgeschütztem Stahlblech oder einer Edelstahlblechplatine beispielsweise im Tiefziehverfahren hergestellten, in Art einer flachen Schale ausgebildeten Abdeckung 15 versehen, deren Schalenboden die Rückwand des Nutzraumes 11 bildet, während deren einstückig umlaufend ausgebildete Schalenwand 17 den der Beschickungsöffnung 13 gegenüberliegenden Endabschnitt des inneren Rohrkörpers 12 übergreift. Durch das Übergreifen des Endabschnittes durch die Schalenwand 17 ist zwischen dem Rohrkörper 12 und der Abdeckung 15 ein Überlappstoß erzeugt, entlang welchem die Abdeckung 15 mit dem Rohrkörper 12 beispielsweise mittels Laserschweißen vakuumdicht verbunden ist. Der Rohrkörper 12 ist an seiner vom Nutzraum 11 abgewandten Außenseite mit einer in Plattenform vorliegenden, beispielsweise aus offenzelligem Polyurethanschaum oder offenzelligem Polystyrolschaum erzeugten Wärmeisolationsschicht 18 umgeben, welche zumindest im wesentlichen die gesamte äußere Oberfläche des inneren Rohrkörpers 12 einnimmt. Die Wärmeisolationsschicht 18 ist an ihrer vom Rohrkörper 12 angewandten Außenseite von einem äußeren Rohrkörper 19 umgeben, welcher somit auch den inneren Rohrkörper 12 umgibt und welcher wie dieser durch mehrmalige Abwinklung einer Edelstahlblechplatine oder eine korrosionsgeschützten Stahlblechplatine erzeugt ist, dessen freie, durch die Abwinklung einander zugewandten Enden 20 beispielsweise durch Elektronenstrahl- oder Mikroplasmaschweißen oder dergleichen miteinander vakuumdicht verbunden sind. Der äußere Rohrkörper 19 ist an seinem der Beschickungsöffnung 13 gegenüberliegenden, gegenüber der Abdeckung 15 vorspringenden Ende ebenso wie der Rohrkörper 12 mit einer im abgezogenen Zustand gezeigten schalenähnlichen Abdeckung 21 versehen, deren Schalenboden 22 die Gehäuserückwand bildet und deren geschlossenwandig durchgehend verlaufende Schalenwand 23 im Montagezustand den ihr zugewandten Endabschnitt des äußeren Rohrkörpers 19 übergreift, so daß zwischen der Abdeckung 21 und dem äußeren Rohrkörper 19 ebenso ein sogenannter Übertappstoß gebildet ist, an welchem entlang die Abdeckung 21 vakuumdicht am äußeren Rohrkörper 19 festgesetzt ist. Die Abdeckung 21 dient zugleich als Aufnahme eines in Plattenform vorliegenden Wärmeisolationskörpers 24, welcher beispielsweise aus offenzelligem Polyurethanschaum oder offenzelligem Polysterolschaum gefertigt ist. Der Wärmeisolationskörper 24 ist entlang seiner Kontur im Montagezustand der Abdeckung 21 gegen die freien Ränder der Wärmeisolationsschicht 18 gedrückt und springt bezüglich der Schalenwand 23 zurück, um den der Beschickungsöffnung 13 gegenüberliegenden Endabschnitt des äußeren Rohrkörpers 19 in die schalenartig ausgebildete Abdeckung 21 einfügen zu können. Gegenüber der Abdeckung 21, an der Beschickungsöffnung 13, ist der äußere Rohrkörper 19 mit dem inneren Rohrkörper 12 durch ein Verbindungsprofil 25 vakuumdicht miteinander verbunden, welches im Querschnitt U-förmig ausgebildet und mit seinen den Rohrkörper 12 bzw. 19 zugewandten U-Profilschenkeln an diesen durch Verschweißen vakuumdicht festgesetzt ist. Das Verbindungsprofil 25 ist aus mehreren vakuumdicht miteinander verbundenen Einzelabschnitten zusammengesetzt, wobei die im Eckbereich des wärmeisolierenden Gehäuses 10 angeordneten Einzelabschnitte 26 sich durchgehend stoßfrei über den Eckbereich der ineinandergefügten Rohrkörper 12 bzw. 19 erstrecken. Die Rohrkörper 12 und 19 umgrenzen im ineinandergefügten Zustand zusammen mit ihren rückseitig vorgesehenen Abdeckungen 15 und 21 und dem frontseitig angeordneten Verbindungsprofil 25 einen evakuierbaren Zwischenraum, welcher mit Wärmeisolationsmaterial 18 und 25 verfüllt ist, welches im Evakuierungszustand zur Abstützung der Rohrkörper 12 und 19 dient. Von den beiden Rohrkörpern 12 bzw. 19 ist am äußeren Rohrkörper 19 an dessen Unterseite ein zur Aufnahme nicht näher beschriebener kältetechnischer Aggregate ein Aufnahmegehäuse 27 festgesetzt, welches an seiner der Beschickungsöffnung 13 zugewandten Seite mit einer Lüftungsschlitze aufweisenden Gehäusewand ausgestattet ist.

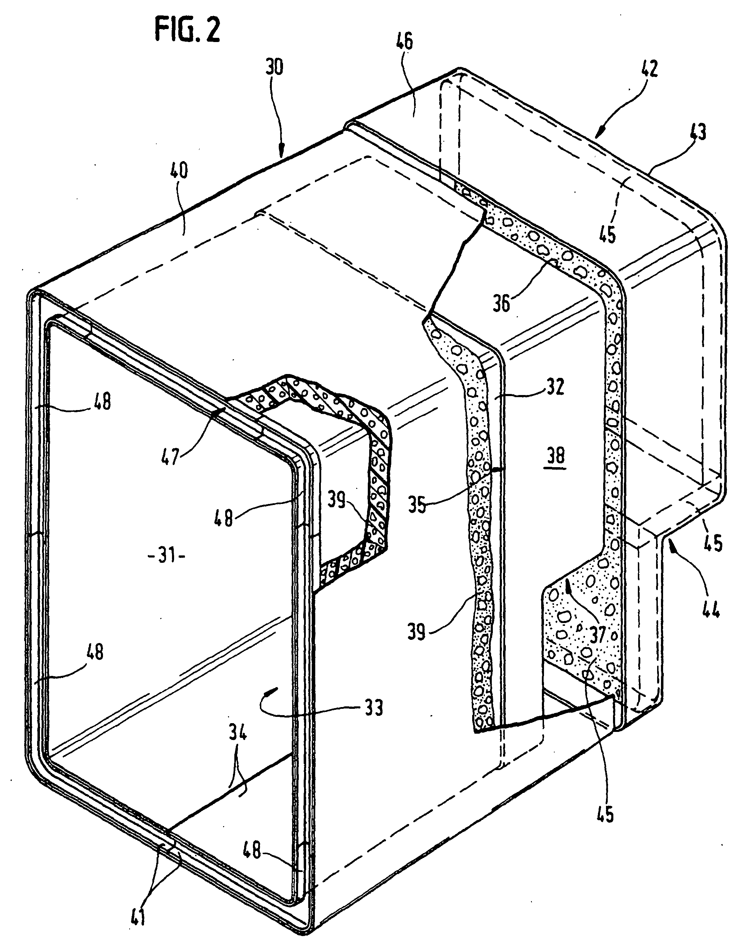

In Fig. 2 ist ein wärmeisolierendes Gehäuse 30 gezeigt, welches ähnlich dem in Fig. 1 dargestellten Gehäuse 10 ausgebildet ist und ebenso wie dieses einen Nutzraum 31 aufweist, dessen Auskleidung durch einen inneren, mit rechteckförmigem Querschnitt ausgestatteten Rohrkörper 32 gebildet ist, welcher durch seine Abmessungen eine zur Be- und Entladung des Nutzraums 31 mit Lagergut dienende Beschickungsöffnung 33 umgrenzt. Der innere Rohrkörper 32 ist durch mehrmaliges Abwinkeln einer z.B. 0,4 mm starken Edelstahlblechplatine oder korrosionsgeschützten Stahlblechplatine erzeugt, dessen durch das Abwinkeln einander zugewandten freien Enden miteinander durch ein dafür geeignetes Schweißverfahren, wie Mikroplasmaschweißen oder Elektronenstrahlschweißen vakuumdicht miteinander verbunden sind. Der innere Rohrkörper 32 ist an seinem der Beschickungsöffnung 33 gegenüberliegenden Ende mit einer schalenähnlich ausgebildeten Abdeckung 34 versehen, deren Schalenboden 35 als Rückwand des Nutzraumes 31 ausgebildet ist und einen stufenartigen Rücksprung 36 aufweist, welcher über die Breite des Schalenbodens 35 verläuft. Der Schalenboden 35 ist mit einem umlaufend entlang seiner Ränder angeordneten, geschlossenwandigen Schalenwand 37 umgrenzt, welche den der Beschickungsöffnung 33 gegenüberliegenden Endabschnitt des Rohrkörpers 32 übergreift und im Montagezustand der Abdeckung 34 einen Überläppstoß mit dem Rohrkörper 32 bildet, entlang welchem die durch Tiefziehen einer Edelstahlblechplatine zu einer korrosionsgeschützten Stahlblechplatine erzeugte Abdeckung am Rohrkörper 32 schweißtechnisch festgesetzt ist. Dieser ist an seiner vom Nutzraum 31 abgewandten Außenseite mit einer Wärmeisolationsschicht 39 allseitig umgeben, welche aus plattenförmigen, offenzelligem Polystyrolschaum bzw. offenzelligem Polyurethanschaum hergestellt ist und zumindest annähernd die ganze Länge des inneren Rohrkörpers 32 einnimmt. Die Wärmeisolationsschicht 39 ist ihrerseits von einem äußeren, als Gehäusemantel ausgebildeten Rohrkörper 40 umgeben, welcher analog dem Rohrkörper 32 durch mehrmalige Abwinklung einer korrosionsgeschützten Stahlblechplatine oder einer Edelstahlblechplatine mit jeweils 0,4 mm Wandstärke gebildet ist, deren durch die Abwinklung einander zugewandten Enden 41 vakuumdicht miteinander verschweißt sind. Der äußere Rohrkörper 40 ist an seiner der Beschickungsöffnung 32 gegenüberliegenden Rückseite mit einer im abgezogenen Zustand dargestellten schalenähnlichen Abdeckung 42 versehen, deren Schalenboden 43 die Rückwand des Gehäuses 30 bildet und einen stufenartigen Rücksprung 34 aufweist, welcher als Maschinenraum zur Aufnahme nicht näher beschriebener Kälteaggregate dient. Der Schalenboden 43 ist mit einer Wärmeisolationsschicht 45 ausgelegt, weiche beispielsweise aus offenzelligem Polyurethan- oder offenzelligem Polystyrolschaumplatten erzeugt ist. Ferner ist der Schalenboden 43 an seinen Rändern mit einer die Wärmeisolationsschichtplatten seitlich fixierenden, umlaufend entlang der Kontur des Schalenbodens 43 verlaufenden Schalenwandung 46 versehen. Diese übergreift im Montagezustand der Abdeckung 42 den ihr zugewandten Endabschnitt des Rohrkörpers 40 und bildet im Montagezustand zusammen mit diesem einen Überlappstoß, entlang welchem die beispielsweise durch Tiefziehen einer Edelstahlblechplatine bzw. korrosionsgeschützten Stahlblechplatine erzeugte Abdeckung 42 mit dem Rohrkörper 40 vakuumdicht verschweißt ist. Gegenüber der Abdeckung 42 sind die der Beschickungsöffnung 33 zugewandten freien Enden der ineinandergesteckten Rohrkörper 32 bzw. 40 vakuumdicht mit einem Querschnitt U-förmig ausgebildeten Verbindungsprofil verbunden, dessen U-Profilschenkel zu den freien Rändern der Rohrkörper 32 bzw. 40 zeigt. Das Verbindungsprofil 47 ist aus mehreren, entlang der Kontur der Rohrkörperquerschnitte verlaufenden, vakuumdicht miteinander verbundenen Profilabschnitten zusammengesetzt, von denen die in den Eckbereichen der Rohrkörper 32 bzw. 40 vorgesehenen Profilabschnitte 48 einstückig durchgehend über den Eckbereich verlaufend ausgebildet sind. Durch das Verbindungsprofil 47 an der Beschickungsseite des wärmeisolierenden Gehäuses 32 und durch die schalenähnliche, vakuumdicht am äußeren Rohrkörper 40 festgesetzte Abdeckung 42 an der Rückseite des Gehäuses 30 ist ein zwischen dem inneren Rohrkörper 32 mit seiner Abdeckung 35 und dem äußeren Rohrkörper 40 mit seiner Abdeckung 42 geschaffener evakuierbarer Zwischenraum bereitgestellt. Der Zwischenraum im Mantelbereich der Rohrkörper 32 und 40 ist mit der Wärmeisolationsschicht 39 und im Bereich der Gehäuserückwand mit der Wärmeisolationsschicht 45 verfüllt, wobei durch die beiden Wärmeisolationsschichten 39 und 45 die als Gehäusemäntel dienenden Rohrkörper 32 und 40 mit ihren Abdeckungen 35 und 42 im evakuierten Zustand des Zwischenraums gegeneinander abgestützt sind.

Die für Kältegerätegehäuse beispielhaft beschriebene Gehäusekonstruktion läßt sich auch mit herdspezifischen, konstruktiven Abwandlungen auf Haushaltsherdes anwenden, wobei die Wärmeisolation auf die bei Herden betriebsspezifisch auftretenden Temperaturen anzupassen ist.

Vorstellbar wäre auch, aus platinartigem Material wie Stahlblech oder dergleichen geformte Rohrkörper mit kreisförmigem Querschnitt durch spanlose Formgebung in Rohrkörper mit Rechteckquerschnitt überzuführen.

## Patentansprüche

1. Wärmeisolierendes Gehäuse (10, 30), mit zwei ineinandergestellt angeordneten, zumindest weitestgehend vakuumdichten, durch eine Wärmeisolationsschicht (18, 39) voneinander beabstandeten, aus Rohrkörpem (12, 19; 32, 40) gebildeten Gehäusemäntel, welche vakuumdicht miteinander verbunden sind und welche einen durch eine Beschickungsöffnung (13, 33) zugänglichen Nutzraum (11, 31) wärmeisolierend umgrenzen, wobei die Beschickungsöffnung (13, 33) durch eine der Öffnungen des eingesteckten Rohrkörpers (12, 32) gebildet ist, **dadurch gekennzeichnet, dass** jeder der Rohrkörper (12, 19; 32, 40) an seiner der Beschickungsöffnung (13, 33) gegenüberliegenden Öffnung mit einer zumindest weitestgehend vakuumdicht ausgebildeten Abdeckung (15, 21; 35, 42) vakuumdicht verschlossen ist, wobei zwischen den Abdeckungen (15, 21; 35 42) ein evakuierbarer, mit Wärmeisolationsmaterial (24, 45) verfüllter Zwischenraum vorgesehen ist.

2. Wärmeisolierendes Gehäuse nach Anspruch 1, **dadurch gekennzeichnet, dass** die Rohrkörper (12, 19; 32, 40) eine quadratische oder rechteckförmige Grundfläche aufweisen und dass die eine ihrer Öffnungen vakuumdicht verschließende Abdeckung (15, 21; 35, 42) schalenähnlich ausgebildet ist.

3. Wärmeisolierendes Gehäuse nach Anspruch 1 oder 2, **dadurch gekennzeichnet, dass** die schalenähnliche Abdeckung (15, 21; 35, 42) die freien Ränder eine der Rohrkörperöffnungen übergreift und am Rohrkörper (12, 19; 32, 40) vakuumdicht festgesetzt ist.

4. Wärmeisolierendes Gehäuse nach Anspruch 1 oder 2, **dadurch gekennzeichnet, dass** die schalenähnliche Abdeckung (15, 21; 35, 42) in den Öffnungsquerschnitt einer der Rohrkörperöffnungen einfügbar ist und im Öffnungsquerschnitt des Rohrkörpers (12, 19; 32, 49'0) vakuumdicht festgesetzt ist.

5. Wärmeisolierendes Gehäuse nach einem der Ansprüche 1 bis 4, **dadurch gekennzeichnet, dass** die schalenähnliche Abdeckung (35, 42) mit einem stufenähnlich ausgebildeten Rücksprung (37, 44) versehen ist, welcher als Maschinenraum dient.

6. Wärmeisolierendes Gehäuse nach einem der Ansprüche 1 bis 5, **dadurch gekennzeichnet, dass** die schalenähnliche Abdeckung (15, 21; 35, 42) durch Tiefziehen einer Edelstahlblechplatine oder einer korrosionsgeschützten Stahlblechplatine erzeugt ist.

7. Wärmeisolierendes Gehäuse nach einem der Ansprüche 1 bis 4, **dadurch gekennzeichnet, dass** die Rohrkörper (12, 19; 32, 49) durch Abwinklung einer Edelstahlblechplatine oder einer korrosionsgeschützten Stahlblechplatine erzeugt sind, wobei die freien Enden der Blechplatine schweißtechnisch vakuumdicht miteinander verbunden sind.

8. Kältegerät mit einem wärmeisolierenden Gehäuse, **dadurch gekennzeichnet, dass** das wärmeisolierende Gehäuse (10, 30) nach einem der Ansprüche 1 bis 7 ausgebildet ist.

9. Haushaltsherd mit einer wärmeisolierenden Herdmuffel, **dadurch gekennzeichnet, dass** die wärmeisolierende Herdmuffel nach einem der Ansprüche 1 bis 4, 6 oder 7 ausgebildet ist.

## Claims

1. Thermally insulating housing (10, 30), with two at least substantially vacuum-tight and vacuum-tightly interconnected housing jackets which are arranged to be set one in the other and are spaced apart by a thermal insulation layer (18, 39) and which are formed from tube bodies (12, 19; 32, 40) and bound in thermally insulating manner a useful space (11, 31) accessible via a loading opening (13, 33), wherein the loading opening (13, 33) is formed by one of the openings of the inserted tube body (12, 32), **characterised in that** each of the tube bodies (12, 19; 32, 40) is vacuum-tightly closed at its opening opposite the loading opening (13, 33) by a cover (15, 21; 25, 42) constructed to be at least substantially vacuum-tight, wherein an evacuatable intermediate space filled with thermal insulation material (24, 45) is provided between the covers (15, 21; 35, 42).

2. Thermally insulating housing according to claim 1, **characterised in that** the tube bodies (12, 19; 32, 40) have a square or rectangular base area and that the cover (15, 21; 35, 42) vacuum-tightly closing one of its openings is constructed to be similar to a basin.

3. Thermally insulating housing according to claim 1 or 2, **characterised in that** the cover (15, 21; 35, 42) similar to the basin engages over the free edges of one of the tube body openings and is vacuum-tightly fixed to the tube body (12, 19; 32, 40).

4. Thermally insulating housing according to claim 1 or 2, **characterised in that** the cover (15, 21; 35, 42) similar to a basin is insertable into the opening cross-section of one of the tube body openings and is vacuum-tightly fixed in the opening cross-section of the tube body (12, 19; 32, 40).

5. Thermally insulating housing according to one of claims 1 to 4, **characterised in that** the cover (35, 42) similar to a basin is provided with a recess (37, 44) which is formed similarly to a step and serves as a motor space.

6. Thermally insulating housing according to one of claims 1 to 5, **characterised in that** the cover (15, 21; 35, 42) similar to a basin is produced by deep-drawing a stainless steel sheet metal plate or a corrosion-protected steel sheet metal plate.

7. Thermally insulating housing according to one of claims 1 to 4, **characterised in that** the tube bodies (12, 19; 32, 40) are formed by bending over a stainless steel sheet metal plate or a corrosion-protected steel sheet metal plate, wherein the free ends of the sheet metal plate are vacuum-tightly connected together by welding.

8. Refrigerating appliance with thermally insulating housing, **characterised in that** the thermally insulating housing (10, 30) is constructed according to one of claims 1 to 7.

9. Domestic oven with a thermally insulating oven muffle, **characterised in that** the thermally insulating oven muffle is constructed according to one of claims 1 to 4, 6 and 7.

## Revendications

1. Boîtier calorifuge (10, 30) comprenant deux enveloppes de boîtier au moins le plus possible étanches au vide formées par des corps tubulaires (12, 19 ; 32, 40) disposés l'un dans l'autre et espacés l'un de l'autre par une couche calorifuge (18, 39), qui sont reliées l'une à l'autre de manière étanche au vide et délimitent, en l'isolant de la chaleur, un espace utile (11, 31) accessible par une ouverture de chargement (13, 33), l'ouverture de chargement (13, 33) étant formée par une des ouvertures du corps tubulaire emboîté (12, 32), **caractérisé en ce que** chacun des corps tubulaires (12, 19 ; 32, 40) est fermé de manière étanche au vide, au niveau de son ouverture opposée à l'ouverture de chargement (13, 33), par un couvercle (15, 21 ; 35, 42) exécuté de manière à être au moins le plus possible étanche au vide, un espace intermédiaire dans lequel le vide peut être fait et qui est rempli d'un matériau calorifuge (24, 45) étant prévu entre les couvercles (15, 21 ; 35, 42).

2. Boîtier calorifuge selon la revendication 1, **caractérisé en ce que** les corps tubulaires (12, 19 ; 32, 40) ont une surface de base carrée ou rectangulaire et **en ce que** le couvercle (15, 21 ; 35, 42) fermant de manière étanche au vide une de leurs ouvertures est exécuté de manière similaire à une coque.

3. Boîtier calorifuge selon la revendication 1 ou 2, **caractérisé en ce que** le couvercle similaire à une coque (15, 21 ; 35, 42) empiète sur les bords libres d'une des ouvertures du corps tubulaire et est fixé de manière étanche au vide sur le corps tubulaire (12, 19 ; 32, 40).

4. Boîtier calorifuge selon la revendication 1 ou 2, **caractérisé en ce que** le couvercle similaire à une coque (15, 21 ; 35, 42) peut être inséré dans la section transversale d'une des ouvertures du corps tubulaire et est fixé de manière étanche au vide dans la section transversale de l'ouverture du corps tubulaire (12, 19 ; 32, 40).

5. Boîtier calorifuge selon l'une des revendications 1 à 4, **caractérisé en ce que** le couvercle similaire à une coque (35, 42) est pourvu d'un épaulement (37, 44) exécuté à la manière d'un gradin, qui sert d'espace machine.

6. Boîtier calorifuge selon l'une des revendications 1 à 5, **caractérisé en ce que** le couvercle similaire à une coque (15, 21 ; 35, 42) est produit par emboutissage d'une platine formée d'une tôle en acier inoxydable ou d'une platine formée d'une tôle d'acier protégée contre la corrosion.

7. Boîtier calorifuge selon l'une des revendications 1 à 4, **caractérisé en ce que** les corps tubulaires (12, 19 ; 32, 40) sont produits par pliage d'une platine formée d'une tôle en acier inoxydable ou d'une platine formée d'une tôle d'acier protégée contre la corrosion, les extrémités libres de la platine en tôle étant reliées l'une à l'autre de manière étanche au vide par une technique de soudage.

8. Appareil frigorifique pourvu d'un boîtier calorifuge, **caractérisé en ce que** le boîtier calorifuge (10, 30) est exécuté selon l'une des revendications 1 à 7.

9. Cuisinière domestique pourvue d'un moufle calorifuge, **caractérisée en ce que** le moufle calorifuge est exécuté selon l'une des revendications 1 à 4, 6 ou 7.
